# EUROPÄISCHE PATENTSCHRIFT

(11) **EP 1 691 967 B1**
(45) Veröffentlichungstag und Bekanntmachung des Hinweises auf die Patenterteilung: **02.07.2008**
(21) Anmeldenummer: 04797727.7
(22) Anmeldetag: 09.11.2004
(51) Int. Cl.: B29C 53/58, B29C 47/10, F16L 9/16

(54) **VORRICHTUNG UND VERFAHREN ZUM HERSTELLEN VON WICKELROHREN**
DEVICE AND METHOD FOR PRODUCING FILAMENT-WOUND PIPES
DISPOSITIF ET PROCEDE POUR PRODUIRE DES TUBES ROULES

(30) Priorität: 24.11.2003 DE 10355073
(43) Veröffentlichungstag der Anmeldung: 23.08.2006
(73) Patentinhaber: Krah AG, 57520 Schutzbach (DE)
(72) Erfinder: KRAH, Karl-Heinz, 57567 Daaden (DE); BERGER, Adolf, 53797 Lohmar-Heide (DE)
(74) Vertreter: von Kreisler Selting Werner
(86) Internationale Anmeldenummer: PCT/EP2004/012649
(87) Internationale Veröffentlichungsnummer: WO 2005/053933

(56) Entgegenhaltungen:
- EP-A- 1 088 645
- DE-B- 1 281 676
- GB-A- 1 151 964
- US-B1- 6 241 840
- PATENT ABSTRACTS OF JAPAN Bd. 007, Nr. 126 (M-219), 31. Mai 1983 (1983-05-31) -& JP 58 045023 A (SEKISUI KAGAKU KOGYO KK), 16. März 1983 (1983-03-16)

## Beschreibung

Die Erfindung betrifft eine Vorrichtung sowie ein Verfahren zum Herstellen von Wickelrohren durch wendelförmiges, überlappendes Aufwickeln eines thermoplastischen, vorzugsweise streifenförmigen Kunststoffprofils auf einen Wickelkern, wobei ein Plastifizieraggregat das Kunststoffprofil über eine Profildüse zuführt.

Vorrichtungen zum Herstellen eines rohrförmigen Gegenstandes durch wendelförmiges oder schraubenlinienförmiges Aufwickeln eines Bandmaterials aus thermoplastischen Kunststoffen, sind beispielsweise aus der DE-AS 1281676 bekannt. Bei einem derartigen Verfahren wird das Bandmaterial unmittelbar nach Austritt aus einem Extruder oder nach Erwärmung im verformungsfähigen Zustand mit überlappender und/oder anstoßender, insbesondere schräganstoßender überlappender Wickelnaht auf einen Wickelkern aufgewickelt und durch Anwendung von Druck und gegebenenfalls zusätzlicher Wärme im Bereich der Wickelnaht verschweißt.

Aus der EP-A-1 088 645 ist ferner ein Verfahren und eine Vorrichtung zur Herstellung einer Wickelhülse zur Aufnahme von bahnförmigem Gut bekannt, bei der ein thermoplastischer Kunststoff über einen Extruder mit Faserbruchstücken mischbar und zu einem Band extrudiert wird, das wendelförmig um einen Wickelkern aufgewickelt wird.

Der Erfindung liegt die Aufgabe zugrunde, eine Vorrichtung sowie ein Verfahren zum Herstellen von Wickelrohren anzugeben, mit denen Druckrohre mit größeren Rohrdurchmesser ohne extreme Vergrößerung der Wandstärke herstellbar sind, wie es bei der bisherigen Wickelrohrherstellung der Fall wäre.

Zur Lösung dieser Aufgabe dienen die Merkmale des Anspruchs 1 und der Ansprüche 8 und 15.

Die Erfindung sieht in vorteilhafter Weise vor, dass das Plastifizieraggregat eine Kneteinrichtung ist, die einen mit Verstärkungsfasern gemischten thermoplastischen Kunststoff über die Profildüse dem Wickelkern zuführt.

Aufgrund der Verwendung eines Schneckenknetaggregates können Verstärkungsfasern auch größerer Faserlängen homogen mit dem thermoplastischen Kunststoff vermischt werden, ohne dass die Fasern verkürzt oder gemahlen werden. Das Schneckenknetaggregat ermöglicht die exakt dosierte Zugabe von Fasern in die aufbereitete Schmelze, wobei die Faserlänge der zugegebenen Fasern erhalten bleibt. Die Druck- und Zugfestigkeitserhöhung aufgrund der Faserstärkung ermöglicht es, z.B größere Rohrdurchmesser mit einer Rohrwand geringer Wandstärke und somit geringem Gewicht herzustellen. Beispielsweise sind aufgrund der Festigkeitserhöhung Druckrohre mit einem Außendurchmesser bis zu 4m und mehr als gewickelte Rohre herstellbar.

Eine derartige homogenisierte Mischung aus Fasern und thermoplastischen Kunststoff unter Beibehaltung der Faserlänge der Fasern ist mit einem herkömmlichen Extruder aufgrund der sehr hohen Scherkräfte nicht herstellbar, weil die Fasern aufgrund der auftretenden Scherkräfte verkürzt und gemahlen werden.

Der thermoplastische Kunststoff besteht vorzugsweise aus Polyethylen oder Polypropylen. Es werden keine Granulate mit Füllmitteln eingesetzt, sondern Polyethylengranulat oder Polypropylengranulat wird im Kneter plastifiziert und mit faserförmigen Verstärkungsmitteln versehen, wobei alle festigkeitserhöhenden Verstärkungsfasern grundsätzlich geeignet sind.

Vorzugsweise bestehen die Verstärkungsfasern aus Kunststoff, Glas und/oder Metall, wobei insbesondere Glasfasern, aber auch Aramidfasern und/oder Karbonfasern in hohem Maße festigkeitserhöhend sind.

Wenn mehrere Lagen des Kunststoffprofils aufgewickelt werden, erfolgt dieses unter einem unterschiedlichen Zuführwinkel, so dass sich die faserverstärkten aufeinanderliegender Wickellagen kreuzen und dadurch zusätzlich die Innendruckfestigkeit der Wickelrohre erhöht wird.

Auf der Außenseite des Wickelrohrs kann zusätzlich zur Erhöhung der Rohrsteifigkeit und des Trägheitsmomentes ein Profil, vorzugsweise ein Rohrprofil, auf die Rohraußenwand aufgewickelt sein.

Die Faserlänge der Verstärkungsfasern beträgt mindestens ca. 2mm, vorzugsweise aber mehr als 4mm bis hin zu endlosen Fasern.

Das Schneckenknetaggregat ist geeignet, derartige Faserlängen bis hin zu endlosen Fasern zu verarbeiten.

Die in dem Schneckenkneter homogenisierte, faserverstärkte, thermoplastische Mischung besteht aus ca. 60 bis ca. 94 Gew.% Polyethylen oder Polypropylen, ca. 1 bis ca. 10 % der Haftvermittler, sowie aus ca. 5 bis ca. 40 Gew.% in Wirrlage in dem Kunststoffprofil gleichmäßig verteilt angeordneten Verstärkungsfasern.

Der Haftvermittler dient dabei insbesondere zur Verbesserung der Haftung zwischen dem Polythylen oder Polpropylen und den Fasern.

Zusätzlich zu der mindestens einen Lage, die aus den faserverstärkten Kunststoffprofilen gebildet ist, können noch eine innerste und/oder eine äußerste Wickellage aus Polyethylen ohne Faserverstärkung auf den Wickelkern aufgewickelt sein.

Im Folgenden wird unter Bezugnahme auf die Zeichnungen ein Ausführungsbeispiel der Erfindung näher erläutert.

Es zeigen:
- Fig. 1: Eine erfindungsgemäße Vorrichtung zum Herstellen von Wickelrohren in einer Seitenansicht,
- Fig. 2: die Vorrichtung gemäß Fig. 1 in einer Draufsicht, und
- Fig. 3: das Aufwickeln mehrerer Wickellagen.

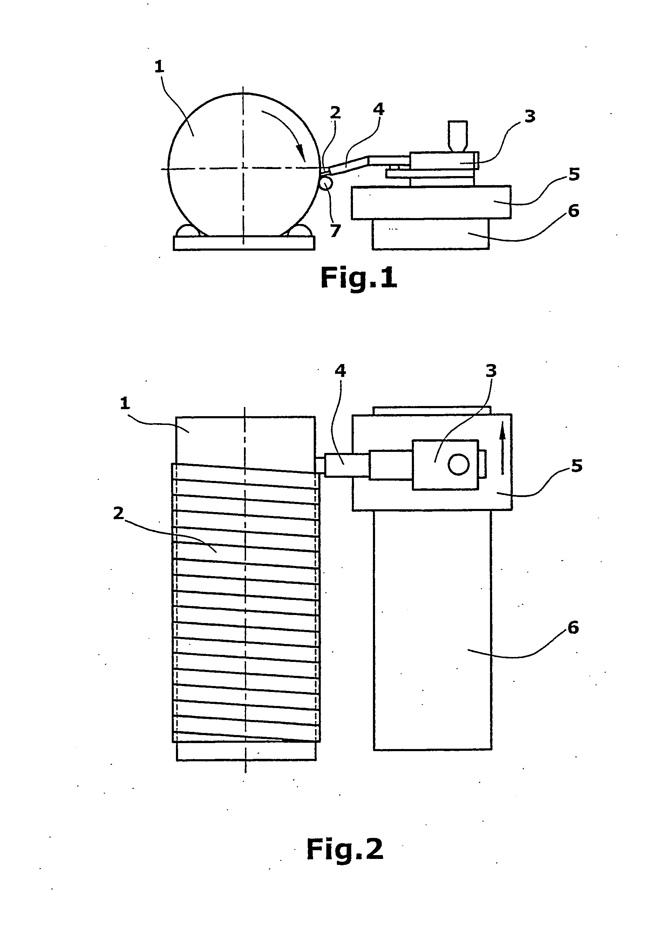

Figur 1 zeigt eine Vorrichtung zum Herstellen eines Wickelrohres durch wendelförmiges, überlappendes Aufwickeln eines thermoplastischen, vorzugsweise streifenförmigen Kunststoffprofils 2 auf einen temperierbaren oder beheizbaren Wickelkern 1.

Ein zum Plastifizieren verwendetes Schneckenknetaggregat 3 sitzt auf einem hin-und herfahrbaren Schlitten 5, der längs einer Führung 6 parallel zu dem Wickelkern 1 hin- und her verfahrbar ist, wobei das Kunststoffprofil 2 aus dem Schneckenknetaggregat 3 über eine Profildüse 4 dem Wickelkern 1 zugeführt wird.

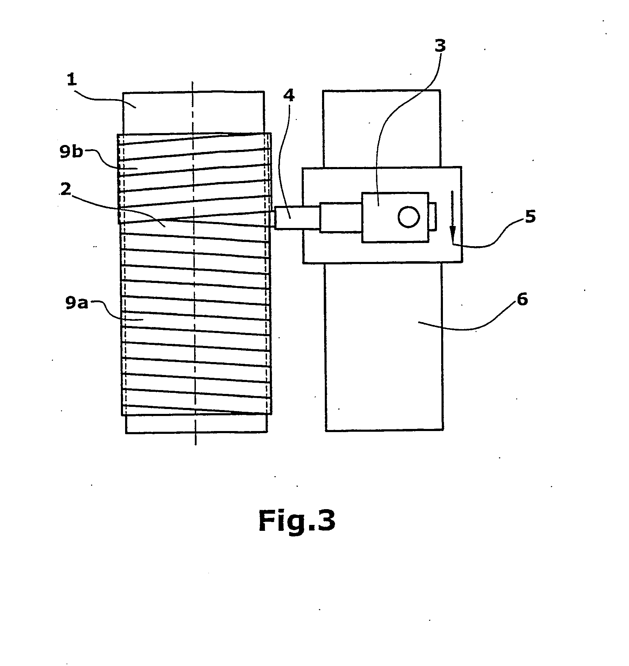

Wie aus Fig. 2 in Draufsicht ersichtlich, wird das Kunststoffprofil 2 unter einem Schrägwinkel dem Wickelkern 1 über die Profildüse 4 zugeführt. In der Umkehrposition des Schlittens 5 an den Enden des Wickelkerns 1 ergibt sich ein betragsmäßig gleicher, aber entgegengesetzt gerichteter Schrägwinkel aufgrund der Umkehrung der Bewegungsrichtung des Schlittens 5, so dass aufeinanderfolgende Wickellagen 9a,9b sich überkreuzen. Es ist dabei vorzugsweise vorgesehen, dass der Start einer neuen Wickellage jeweils an unterschiedlichen Enden des Wickelkern 1 erfolgt, so dass der Wickelvorgang im wesentlichen kontinuierlich fortgesetzt werden kann. Dabei kann das erste Kunststoffprofil 2 einer Wickellage auch gerade zugeführt werden, um einen geraden Abschluss an den Stirnseiten des Wickelrohrs zu erhalten. In Fig. 3 ist die unterschiedliche Orientierung des Kunststoffprofils 2 aufeinanderliegender Wickellagen 9a,9b ersichtlich.

Während also der Schlitten hin- und hergefahren wird, dreht sich der Wickelkern 1, um das streifenförmige Kunststoffprofil 2 überlappend aufzuwickeln, das an den Überlappungs- und Stoßstellen verschweißt wird.

Das Schneckenknetaggregat 3 führt der Profildüse 4 eine homogenisierte Mischung eines thermoplastischen Kunststoffs aus Polyethylen oder Polypropylen und Verstärkungsfasern aus Kunststoff, Glas und/oder Metall zu. Die Fasern sind in der Mischung beim Austritt aus dem Doppelschneckenkneter in Wirrlage homogen verteilt im thermoplastischem Kunststoff angeordnet und werden dann über die Profildüse 4 dem Wickelkern 1 zugeführt.

Das Schneckenknetaggregat besteht vorzugsweise aus einem Doppelschnekkenkneter, bei dem die parallel nebeneinander angeordneten Schnecken sich nicht gegenläufig drehen, sondern die gleiche Drehrichtung aufweisen. Die Kneteinrichtung wird auch als Gleichdrall-Doppelschneckenkneter bezeichnet. Die Temperatur des thermoplastischen Kunststoffs beträgt in Abhängigkeit der verarbeiteten Mischung ca. 170 bis 240 °C.

Einschnecken- sowie gegenläufig drehende Doppelschneckenextruder sind dagegen nicht geeignet, die Mischung aus faserverstärkenden Fasern und thermoplastischen Kunststoff herzustellen, weil sie keine ausreichende Homogenisierwirkung haben und die Fasern aufgrund der auftretenden Scherkräfte verkürzen bzw. mahlen, so dass die zur Herstellung druckfester Wickelrohre mit großem Durchmesser erforderliche Druckfestigkeit nicht erreicht werden kann.

Vorzugsweise werden Verstärkungsfasern aus Glasfasern verwendet, allerdings können für besondere Einsatzzwecke und besonders hohe Festigkeitsanforderungen auch Aramidfasern und/oder Karbonfasern oder eine Mischung unterschiedlicher Fasern eingesetzt werden.

Die Faserlänge sollte mindestens 2mm betragen, vorzugsweise aber mehr als 4mm. Bei einem bevorzugten Ausführungsbeispiel beträgt die Faserlänge ca. 6 mm. Allerdings ist auch der Einsatz längerer Fasern bis hin zu endlosen Fasern möglich.

Die aus dem Schneckenkneter 3 austretende faserverstärkte, thermoplastische Kunststoffmischung besteht vorzugsweise aus ca. 60 bis ca. 94 Gew.% Polyethylen oder Polypropylen, ca. 1 bis ca. 10 % Haftvermittler sowie aus ca. 5 bis ca. 40 Gew.% Verstärkungsfasern.

Zum Herstellen von Wickelrohren mit erhöhter Innendruckfestigkeit wird demzufolge ein Doppelschneckenkneter 3 als Plastifizieraggregat verwendet, wobei ein thermoplastischer Kunststoff in dem Doppelschneckenkneter 3 auf eine vorgegebene Schmelztemperatur gebracht wird und dann mit Verstärkungsfasern homogen gemischt wird. Anschließend kann die faserverstärkte, homogenisierte, thermoplastische Kunststoffmischung der Profildüse 4 zugeführt werden.

Das Wickelrohr kann insgesamt aus mehreren Wickellagen gebildet sein, wobei die innerste und/oder äußerste Wickellage aus Polyethylen ohne Faserverstärkung gebildet sein kann. Die faserverstärkten Wickellagen sind vorzugsweise kreuzweise gewickelt, d.h. aufeinander angrenzende Wickellagen 9a,9b verlaufen unter unterschiedlichen Winkeln, derart, dass sich die Orientierung der Fasern in den einzelnen Wickellagen überkreuzt.

Mit der beschriebenen Vorrichtung und dem Herstellverfahren sind großdimensionierte Wickeldruckrohre mit sehr hoher Innendruckfestigkeit herstellbar, wobei die Wanddicke, auf Grund der Faserverstärkung wesentlich, d.h. ca. 50%, geringer ist als mit herkömmlichen Herstellungsmethoden ohne Faserverstärkung.

Die Wandstärke beträgt beispielsweise bei einem Wickelrohr mit einem Durchmesser von ca. 4m ca. 100 mm bis 200 mm, wobei jede Wickellage 9a,9b aus einem Kunststoffprofil 2 mit einer Dicke von ca. 5 bis 10 mm gebildet wird. Derartige druckfeste Wickelrohre sind z.B. für den Trinkwassertransport geeignet.

Wie aus Fig. 1 ersichtlich, dreht sich der Wickelkern 1 in Uhrzeigerrichtung, so dass das Kunststoffprofil 2 nach unten auf den Wickelkern 1 aufgewickelt wird, wobei eine Andrückeinrichtung 7 das Kunststoffprofil 2 gegen den Wickelkern 1 andrückt. Der Schneckenkneter 3 verläuft unter einem Winkel von 90° zur Längsachse des Wickelkerns 1, wobei sich der Schrägwinkel jeder Wickellage 9,11 allein aufgrund des Vorschubs des Schlitten 5 ergibt.

## Patentansprüche

1. Vorrichtung zum Herstellen von Wickelrohren durch wendelförmiges Aufwickeln eines thermoplastischen, vorzugsweise streifenförmigen Kunststoffprofils (2) auf einen Wickelkern (1), wobei ein Plastifizieraggregat das Kunststoffprofil (2) über eine Profildüse (4) dem Wickelkern (1) zuführt,
**dadurch gekennzeichnet,**
**dass** das Plastifierzieragreggat eine Kneteinrichtung (3) ist, die einen mit Verstärkungsfasern gemischten thermoplastischen Kunststoff über die Profildüse (4) zuführt, wobei die Kneteinrichtung ein Schneckenknetaggregat ist, derart, dass die Verstärkungsfasern homogen mit dem thermoplastischen Kunststoff vermischbar sind, wobei die Faserlänge der Verstärkungsfasern erhalten bleibt.

2. Vorrichtung nach Anspruch 1, **dadurch gekennzeichnet, dass** der thermoplastische Kunststoff aus Polyethylen oder Polypropylen besteht.

3. Vorrichtung nach einem der Ansprüche 1 oder 2, **dadurch gekennzeichnet, dass** die Verstärkungsfasern aus Kunststoff, Glas und/oder Metall bestehen.

4. Vorrichtung nach Anspruch 2, **dadurch gekennzeichnet, dass** die Verstärkungsfasern aus Glasfasern, Aramidfasern und/oder Karbonfasern bestehen.

5. Vorrichtung nach einem der Ansprüche 3 oder 4, **dadurch gekennzeichnet, dass** die Faserlänge der Verstärkungsfasern mindestens 2 mm beträgt, vorzugsweise mehr als 4 mm bis endlos beträgt.

6. Vorrichtung nach einem der Ansprüche 1 bis 5, **dadurch gekennzeichnet, dass** das Wickelrohr aus mehreren aus dem Kunststoffprofil (2) gebildeten aufeinanderliegenden unter einem Schrägwinkel zueinander verlaufenden Wickellagen 9a,9b besteht.

7. Vorrichtung nach einem der Ansprüche 1 bis 4, **dadurch gekennzeichnet, dass** die in der Kneteinrichtung (3) homogenisierte, faserverstärkte Mischung aus
- 60 bis 94 Gew.-% Polyethylen oder Polypropylen
- 1 bis 10 Gew.-% Haftvermittler, sowie
- 5 bis 40 Gew.-% Verstärkungsfasern
besteht.

8. Verfahren zum Herstellen von Wickelrohren durch wendelförmiges überlappendes Aufwickeln eines thermoplastischen, vorzugsweise streifenförmigen Kunststoffprofils (2) auf einen Wickelkern (1), wobei das Kunststoffprofil (2) aus einem Plastifizieraggregat und eine Profildüse (4) dem Wickelkern (1) zugeführt wird,
**dadurch gekennzeichnet,**
**dass** zum Herstellen von Wickelrohren mit erhöhter Innendruckfestigkeit eine Kneteinrichtung (3) als Plastifizieraggregat verwendet wird,
und **dass** ein thermoplastischer Kunststoff in der Schneckenkneter (3) auf eine vorgegebene Schmelztemperatur gebracht wird und mit Verstärkungsfasern homogen gemischt wird,
wobei anschließend die faserverstärkte homogenisierte thermoplastische Kunststoffmischung über die Profildüse (4) dem Wickelkern (1) zugeführt wird, derart, dass die Faserlänge der zugegebenen Verstärkungsfasern erhalten bleibt.

9. Verfahren nach Anspruch 8, **dadurch gekennzeichnet, dass** als thermoplastischer Kunststoff Polyethylen oder Polypropylen verwendet wird.

10. Verfahren nach Anspruch 8 oder 9, **dadurch gekennzeichnet, dass** Verstärkungsfasern aus Kunststoff, Glas und/oder Metall verwendet werden.

11. Verfahren nach einem der Ansprüche 8 bis 10, **dadurch gekennzeichnet, dass** das Wickelrohr aus mehreren übereinander gewickelten Wickellagen (9a,9b) gebildet wird.

12. Verfahren nach Anspruch 11, **dadurch gekennzeichnet, dass** das Kunststoffprofil (2) unter einem vorbestimmten Schrägwinkel dem Wickelkern (1) zugeführt wird.

13. Verfahren nach Anspruch 11 oder 12, **dadurch gekennzeichnet, dass** die mehreren Wickellagen (9a,9b) kontinuierlich aufgewickelt werden und dass an den Umkehrpositionen an den Enden des Wickelkerns (1) sich der Schrägwinkel aufgrund der Umkehr der Wickelrichtung auf einen unterschiedlichen, entgegengesetzt gerichteten Schrägwinkel einstellt, derart dass sich aufeinanderfolgende Wickellagen (9a,9b) überkreuzen.

14. Verfahren nach einem der Ansprüche 11 bis 13, **dadurch gekennzeichnet, dass** die innerste und/oder die äußerste Wickellage aus Polyethylen ohne Faserverstärkung gewickelt wird.

15. Wickelrohr herstellt nach dem Verfahren gemäß Anspruch 8, **dadurch gekennzeichnet, dass** es aus einer faserverstärkten homogenen Mischung aus
- 60 bis 94 Gew.-% Polyethylen oder Polypropylen
- 1 bis 10 Gew.-% Haftvermittler, sowie
- 5 bis 40 Gew.-% in Wirrlage angeordneten Verstärkungsfasern
besteht.

## Claims

1. A device for manufacturing wrapped tubes by helically winding up a thermoplastic, preferably strip-shaped plastic profile (2) onto a winding core (1), a plasticizing aggregate supplying the plastic profile (2) to the winding core (1) via a profile nozzle (4),
**characterized in**
**that** the plasticizing aggregate is a kneading means (3) supplying a thermoplastic material mixed with reinforcing fibers via the profile nozzle (4), the kneading means being a screw kneading aggregate, such that the reinforcing fibers can be homogeneously mixed with the thermoplastic material, while the fiber length of the reinforcing fibers is maintained.

2. The device according to claim 1, **characterized in that** the thermoplastic material consists of polyethylene or polypropylene.

3. The device according to one of claims 1 or 2, **characterized in that** the reinforcing fibers consist of plastic, glass and/or metal.

4. The device according to claim 2, **characterized in that** the reinforcing fibers consist of glass fibers, aramide fibers and/or carbon fibers.

5. The device according to one of claims 3 or 4, **characterized in that** the fiber length of the reinforcing fibers amounts to at least 2 mm, preferably to more than 4 mm up to endless.

6. The device according to one of claims 1 to 5, **characterized in that** the wrapped tube consists of several superposed winding layers (9a,9b) formed of the plastic profile (2) and extending under an oblique angle relative to each other.

7. The device according to one of claims 1 to 4, **characterized in that** the fiber-reinforced mixture homogenized in the kneading means (3) consists of
- 60 to 94 percent by weight of polyethylene or polypropylene
- 1 to 10 percent by weight of bonding agent as well as
- 5 to 40 percent by weight of reinforcing fibers.

8. A method for manufacturing wrapped tubes by winding up a thermoplastic, preferably strip-shaped plastic profile (2) onto a winding core (1) in an overlapping manner, the plastic profile (2) being supplied to the winding core (1) from a plasticizing aggregate and a profile nozzle (4),
**characterized in**
**that** a kneading means (3) is employed as a plasticizing aggregate for manufacturing wrapped tubes with an increased internal pressure resistance,
and **that** a thermoplastic material is brought to a predetermined melting temperature and homogeneously mixed with reinforcing fibers in the screw kneader (3),
the fiber-reinforced homogenized thermoplastic material mixture being subsequently supplied to the winding core (1) via the profile nozzle (4).

9. The method according to claim 8, **characterized in that** polyethylene or polypropylene is used as thermoplastic material.

10. The method according to claim 8 or 9, **characterized in that** reinforcing fibers of plastic, glass and/or metal are used.

11. The method according to one of claims 8 to 10, **characterized in that** the wrapped tube is formed of several winding layers (9a,9b) wrapped on top of each other.

12. The method according to claim 11, **characterized in that** the plastic profile (2) is supplied to the winding core (1) under a predetermined oblique angle.

13. The method according to claim 11 or 12, **characterized in that** the several winding layers (9a,9b) are wound up continuously and that at the reversal positions at the ends of the winding core (1), the oblique angle changes to a different oblique angle with opposite direction due to the reversal of the winding direction in such a manner that succeeding winding layers (9a,9b) cross each other.

14. The method according to one of claims 11 to 13, **characterized in that** the innermost and/or the outermost winding layer is wound of polyethylene without any fiber reinforcement.

15. A wrapped tube manufactured according to the method according to claim 8, **characterized in that** it consists of a fiber-reinforced homogeneous mixture of
- 60 to 94 percent by weight of polyethylene or polypropylene
- 1 to 10 percent by weight of bonding agent as well as
- 5 to 40 percent by weight of reinforcing fibers arranged in random orientation.

## Revendications

1. Dispositif pour produire des tubes enroulés, par enroulement en hélice, sur un mandrin d'enroulement (1), d'un profilé (2) en matière thermoplastique, de préférence en forme de bande, un groupe de plastification fournissant au mandrin d'enroulement (1), le profilé en matière thermoplastique (2), par une buse (4) pour profilés,
**caractérisé en ce que** le groupe de plastification est un dispositif de malaxage (3) qui, par la buse (4) pour profilés, fournit une matière thermoplastique mélangée avec des fibres de renfort, le dispositif de malaxage étant un groupe de malaxage à vis sans fin, de telle sorte que les fibres de renfort peuvent être mélangées, de façon homogène, avec la matière thermoplastique, la longueur des fibres de renfort étant conservée.

2. Dispositif selon la revendication 1, **caractérisé en ce que** la matière thermoplastique se compose de polyéthylène ou de polypropylène.

3. Dispositif selon la revendication 1 ou 2, **caractérisé en ce que** les fibres de renfort se composent de matière plastique, de verre et/ou de métal.

4. Dispositif selon la revendication 2, **caractérisé en ce que** les fibres de renfort se composent de fibres de verre, de fibres d'aramide et/ou de fibres de carbone.

5. Dispositif selon la revendication 3 ou 4, **caractérisé en ce que** la longueur des fibres de renfort est au moins égale à 2 mm, de préférence supérieure à 4 mm, jusqu'à une longueur sans fin.

6. Dispositif selon l'une des revendications 1 à 5,
**caractérisé en ce que** le tube enroulé se compose de plusieurs couches enroulées successives (9a, 9b) formées par le profilé (2) en matière thermoplastique et s'étendant les unes par rapport aux autres suivant un angle d'obliquité.

7. Dispositif selon l'une des revendications 1 à 4,
**caractérisé en ce que** le mélange renforcé par des fibres et rendu homogène dans le dispositif de malaxage (3) se compose :
- de 60 % à 94 % en poids de polyéthylène ou de polypropylène
- de 1 % à 10 % en poids d'un agent adhésif, ainsi que
- de 5 % à 40 % en poids de fibres de renfort.

8. Procédé pour produire des tubes enroulés par enroulement en hélice, et par chevauchement, sur un mandrin d'enroulement (1), d'un profilé (2) en matière thermoplastique, de préférence en forme de bande, le profilé (2) en matière thermoplastique provenant d'un groupe de plastification et d'une buse (4) pour profilés étant fourni au mandrin d'enroulement (1),
**caractérisé en ce que**, pour la production de tubes enroulés à plus grande résistance à la pression intérieure, on utilise un dispositif de malaxage (3) comme groupe de plastification,
et **en ce qu'**une matière thermoplastique est placée dans le malaxeur à vis sans fin (3), à une température de fusion prédéfinie, et est mélangée de façon homogène avec des fibres de renfort,
le mélange de matière thermoplastique homogénéisé et renforcé par des fibres étant ensuite fourni au mandrin d'enroulement (1), par la buse (4) pour profilés, de telle sorte que la longueur des fibres de renfort fournies est conservée.

9. Procédé selon la revendication 8, **caractérisé en ce que** l'on utilise, comme matière thermoplastique, du polyéthylène ou du polypropylène.

10. Procédé selon la revendication 8 ou 9, **caractérisé en ce que** l'on utilise des fibres de renfort se composant de matière plastique, de verre et/ou de métal.

11. Procédé selon l'une des revendications 8 à 10,
**caractérisé en ce que** le tube enroulé est formé de plusieurs couches (9a, 9b) enroulées les unes sur les autres.

12. Procédé selon la revendication 11, **caractérisé en ce que** le profilé (2) en matière thermoplastique est fourni au mandrin d'enroulement (1) suivant un angle d'obliquité prédéfini.

13. Procédé selon la revendication 11 ou 12, **caractérisé en ce que** les plusieurs couches enroulées (9a, 9b) sont enroulées en continu, et **en ce que**, au niveau des positions d'inversion aux extrémités du mandrin d'enroulement (1), l'angle d'obliquité, en raison de l'inversion du sens d'enroulement, se règle sur un angle d'obliquité différent, orienté dans le sens opposé, de telle sorte que les couches enroulées successives (9a, 9b) se croisent.

14. Procédé selon l'une des revendications 11 à 13,
**caractérisé en ce que** la couche enroulée située le plus à l'intérieur et/ou à l'extérieur est enroulée à partir de polyéthylène sans renfort de fibres.

15. Tube enroulé produit selon le procédé conforme à la revendication 8, **caractérisé en ce qu'**il se compose d'un mélange homogène et renforcé de fibres constitué :
- de 60 % à 94 % en poids de polyéthylène ou de polypropylène
- de 1 % à 10 % en poids d'un agent adhésif, ainsi que
- de 5 % à 40% en poids de fibres de renfort disposées en couche emmêlée.
